# FASCICULE DE BREVET EUROPEEN

(11) **EP 4 063 630 B1**
(45) Date de publication et mention de la délivrance du brevet: **16.08.2023**
(21) Numéro de dépôt: 22158467.5
(22) Date de dépôt: 24.02.2022
(51) Int. Cl.: F02C 3/30, F02C 6/20, F02C 7/143

(54) **VÉHICULE MUNI D'UNE INSTALLATION MOTRICE COMPRENANT AU MOINS UN MOTEUR THERMIQUE COOPÉRANT AVEC UN SYSTÈME DE CONDITIONNEMENT D' AIR**
FAHRZEUG MIT EINER ANTRIEBSANLAGE MIT MINDESTENS EINEM VERBRENNUNGSMOTOR, DER MIT EINER KLIMAANLAGE ZUSAMMENWIRKT
VEHICLE PROVIDED WITH A POWER PLANT COMPRISING AT LEAST ONE THERMAL ENGINE COOPERATING WITH AN AIR CONDITIONING SYSTEM

(30) Priorité: 24.03.2021 FR 2102935
(43) Date de publication de la demande: 28.09.2022
(73) Titulaire: Airbus Helicopters, 13725 Marignane Cedex (FR)
(72) Inventeur: BARAIS, Olivier, 13820 ENSUES LA REDONNE (FR)
(74) Mandataire: GPI Brevets

(56) Documents cités:
- EP-A1- 3 418 192
- EP-A2- 2 082 959
- FR-A1- 3 007 391
- US-A1- 2009 117 840

## Description

La présente invention concerne un véhicule muni d'une installation motrice comprenant au moins un moteur thermique coopérant avec un système de conditionnement d'air du véhicule.

Plus particulièrement, l'invention se rapporte à un système apte à augmenter la puissance développée par un moteur thermique d'un véhicule, par exemple un aéronef et notamment un giravion.

En effet, un giravion comporte une installation motrice pour mettre en rotation notamment une voilure tournante. L'installation motrice est munie d'un ou de plusieurs moteurs thermiques mettant en mouvement une chaîne de transmission de puissance reliée à la voilure tournante.

Par ailleurs, il est à noter que l'on entend dans l'ensemble du texte par « moteur thermique » un moteur brûlant un carburant, des turbomoteurs ou encore des moteurs à pistons par exemple.

Chaque moteur thermique est à même de fonctionner selon une pluralité de régimes de fonctionnement.

Par exemple, les limitations thermiques d'un moteur thermique et les limitations en couple d'une boîte de transmission de puissance de la chaîne de transmission de puissance permettent de définir des régimes normaux connus, par exemple, sous les expressions régime de décollage, régime maximal continu, régime maximal en transitoire.

Des régimes d'urgence utilisés en cas de panne d'un moteur thermique existent sur les giravions multimoteurs. Ces régimes d'urgence sont parfois connus sous l'acronyme « OEI » correspondant à l'expression anglaise « One Engine Inoperate ».

Lors de la panne d'un des moteurs thermiques d'une installation motrice multimoteur, la puissance totale pouvant être fournie à la chaîne de transmission de puissance est de fait réduite. L'autre moteur thermique en fonctionnement peut alors mettre en oeuvre un régime d'urgence pour développer une puissance plus importante que les régimes normaux pendant une courte durée afin de limiter les conséquences de la panne.

Les performances d'un moteur thermique lorsqu'un régime d'urgence est appliqué peuvent limiter les performances de l'aéronef. En particulier, la masse de l'aéronef au décollage peut être limitée en fonction des performances des moteurs thermiques lorsqu'un régime d'urgence est appliqué.

Pour améliorer la puissance développée par un moteur thermique, un fluide peut être injecté dans ce moteur thermique. Le fluide peut notamment être de l'eau pure ou un mélange d'eau et d'alcool.

Lorsque le moteur thermique est un turbomoteur muni d'un générateur de gaz comportant une entrée d'air et un compresseur en amont d'une chambre de combustion, l'eau peut par exemple être injectée dans l'entrée d'air.

Le document FR 3007391 décrit une installation motrice munie d'un système de secours d'injection de fluide dans deux turbomoteurs. Ce système comporte son propre réservoir contenant un fluide aqueux. Le réservoir est relié par deux conduites de pressurisation aux deux générateurs de gaz des deux turbomoteurs. Le fluide est alors pressurisé dans le réservoir par un gaz prélevé sur chaque générateur de gaz. Le système comporte de plus un organe d'injection par turbomoteur, l'organe d'injection étant relié par une conduite d'injection au réservoir et étant configuré pour projeter le fluide dans le moteur associé. Deux distributeurs hydrauliques sont disposés respectivement le long des deux conduites d'injection des deux turbomoteurs. Chaque distributeur hydraulique d'un turbomoteur communique avec la conduite de pressurisation débouchant sur l'autre turbomoteur.

Un tel système est intéressant mais peut aussi être relativement lourd en raison de la présence du réservoir dédié. De plus, les gaz prélevés sur les turbomoteurs pour faire fonctionner le système sont très chauds, de l'ordre de 400 degrés Celsius. La température élevée des gaz peut alors imposer des contraintes d'installation fortes. La mise en place d'un tel système peut donc être délicate.

Le document EP 3 418 192 A1 décrit un système muni d'un dispositif de lubrification. Ce dispositif de lubrification comprend un liquide de lubrification qui lubrifie un dispositif mécanique. Le système comporte en outre un circuit de récupération d'énergie thermique. Ce circuit de récupération d'énergie thermique possède un premier échangeur thermique permettant un échange thermique entre un fluide caloporteur et le liquide de lubrification afin de chauffer un habitacle.

Le document EP 2 082 959 A2 décrit un aéronef comprenant un premier réservoir adapté pour contenir un liquide usé apte à alimenter un moteur à réaction après traitement.

Le document US 2009/117840 décrit un système et une méthode pour délivrer de l'air dans une cabine d'aéronef.

La présente invention a alors pour objet un véhicule muni d'une installation motrice et d'un système de secours d'injection de fluide visant à être relativement discret d'un point de vue encombrement et massique et/ou relativement facile à installer sur le véhicule.

L'invention concerne donc un véhicule muni d'une installation motrice, ladite installation motrice ayant au moins un moteur thermique, ledit véhicule ayant un système de conditionnement d'air pour contrôler une température d'un air dans une section du véhicule, ledit système de conditionnement d'air comprenant un fluide circulant dans un système de circulation de fluide, le système de circulation de fluide comprenant un circuit fluidique cheminant dans le véhicule, ledit système de circulation de fluide comprenant au moins une pompe configurée pour faire circuler ledit fluide dans ledit circuit fluidique.

Selon l'invention, le véhicule comporte un organe d'injection par moteur thermique dudit au moins un moteur thermique, ledit organe d'injection étant configuré pour injecter ledit fluide dans le moteur thermique associé, ledit véhicule comportant un circuit de secours connectant fluidiquement le système de circulation de fluide à chaque organe d'injection, ledit circuit de secours comprenant un dispositif de distribution contrôlé par un contrôleur pour autoriser sur commande une circulation du fluide vers ledit organe d'injection.

L'expression « système de conditionnement d'air » désigne un système apte à réchauffer ou à refroidir ou à réchauffer et refroidir de l'air dans une section du véhicule.

L'expression « le véhicule comporte un organe d'injection par moteur thermique dudit au moins un moteur thermique » signifie que, pour chaque moteur thermique, le véhicule comporte un organe d'injection propre à ce moteur thermique. Un véhicule monomoteur comporte alors un unique organe d'injection pour l'unique moteur thermique. Un véhicule bimoteur comporte alors deux organes d'injection respectivement pour les deux moteurs.

De même, l'expression « par organe d'injection » est utilisée dans la description indépendamment du nombre d'organe d'injection, à savoir aussi bien en présence d'un unique moteur thermique et d'un unique organe d'injection qu'en présence de plusieurs moteurs thermiques et de plusieurs organes d'injection respectifs. Il en va de même de l'expression « chaque organe d'injection ».

L'expression « ledit circuit de secours comprenant un dispositif de distribution contrôlé par un contrôleur pour autoriser sur commande une circulation du fluide vers ledit organe d'injection » signifie que le contrôleur transmet un signal de commande au dispositif de distribution pour modifier la position d'au moins un élément de de ce dispositif de distribution, par exemple en requérant un déplacement de tout ou d'une partie du dispositif de distribution, pour acheminer le fluide vers un organe d'injection si nécessaire.

Le terme « signal » peut désigner un signal par exemple électrique, optique, analogique, numérique porteur d'une information ou d'un ordre...

Dans la négative, le dispositif de distribution empêche le fluide de rejoindre le ou les organes d'injection. Le fluide est alors uniquement utilisé à des fins de chauffage ou de refroidissement, par exemple dans une cabine du véhicule.

Dès lors, une ou plusieurs pompes font circuler le fluide en boucle fermée dans le système de circulation de fluide. Par exemple, le circuit fluidique comporte des conduites, un réchauffeur et/ou un refroidisseur, un distributeur hydraulique de régulation.... Une pompe aspire alors le fluide dans un réservoir et le met en mouvement dans ce circuit fluidique afin que le fluide retourne dans le réservoir, en ayant auparavant traversé les conduites, le réchauffeur et le refroidisseur éventuels...

Etonnamment, le contrôleur pilote si besoin le dispositif de distribution pour qu'au moins une partie de ce même fluide du système de conditionnement d'air soit utilisée afin d'obtenir un surcroit de puissance dans une phase d'assistance. A titre d'exemple, sur un aéronef monomoteur, le contrôleur peut être sollicité pour obtenir un surcroit de puissance durant une manoeuvre particulière, pour sortir rapidement d'une zone à faible visibilité... Sur un hélicoptère multimoteur, le contrôleur peut par exemple contrôler le dispositif de distribution notamment en cas de panne d'un moteur thermique, pour injecter le fluide dans un moteur thermique restant en fonctionnement.

En effet et de manière surprenante, un fluide d'un système de conditionnement d'air peut aussi permettre d'obtenir un surcroit de puissance avec un moteur thermique. Par exemple, le fluide comporte au moins de l'eau, voire de l'eau et du glycol, le pourcentage d'eau et de glycol dans le fluide étant adapté par essais pour convenir au mieux aux deux applications, à savoir dans un système de conditionnement d'air et dans un système d'augmentation de la puissance développée par un moteur thermique.

L'invention s'avère dés lors relativement simple et peut avoir une masse raisonnable dans la mesure où elle peut utiliser le système de conditionnement d'air existant d'un véhicule. Il n'y a pas lieu d'ajouter des pompes par exemple. En outre, un système de conditionnement d'air comporte parfois deux pompes, par exemple pour assurer une fonction de désembuage avec fiabilité, ce qui permet d'obtenir un système d'assistance d'un moteur thermique présentant aussi une bonne fiabilité.

De plus, un tel système peut tendre à réduire les risques de pannes dormantes. En effet, la ou les pompes du système de conditionnement d'air sont toujours en fonctionnement, hors cas de panne.

Par ailleurs, un tel système n'est de fait pas sujet aux problèmes liés à l'utilisation d'un gaz chaud prélevé sur un moteur thermique.

Le véhicule peut de plus comporter une ou plusieurs des caractéristiques qui suivent.

Ainsi, le contrôleur peut comprendre au moins un calculateur.

Selon une possibilité, le véhicule peut comporter au moins un calculateur moteur configuré pour piloter ledit au moins un moteur thermiques, le contrôleur comprenant ledit au moins un calculateur moteur.

Ainsi, au moins un calculateur moteur peut faire office de contrôleur.

Un véhicule multimoteur peut comprendre un calculateur moteur par moteur thermique susceptible de détecter une panne de ce moteur thermique. En présence d'une telle panne, ce calculateur moteur ou un autre calculateur moteur peut agir sur un dispositif de distribution. Eventuellement, sur un véhicule multimoteur un des calculateurs moteur est un calculateur maître formant le contrôleur.

De manière alternative ou complémentaire, le contrôleur peut comprendre un autre calculateur du véhicule.

Selon une possibilité compatible avec les précédentes, le contrôleur peut comporter une interface homme-machine.

L'injection du fluide dans un moteur thermique peut par exemple être commandée par un pilote sollicitant une telle interface homme-machine.

Selon une possibilité compatible avec les précédentes, ledit circuit de secours peut être connecté fluidiquement au circuit fluidique.

Le circuit fluidique peut comprendre une connexion à trois branches débouchant notamment sur une entrée du circuit de secours ou encore un distributeur hydraulique apte à être relié à chaque organe d'injection.

Selon une possibilité compatible avec les précédentes et une variante du dispositif de distribution, ce dispositif de distribution peut comporter une vanne commandée par organe d'injection, chaque vanne commandée ayant un bloqueur déplaçable d'une position ouverte autorisant la circulation du fluide vers l'organe d'injection associé à une position fermée interdisant la circulation du fluide vers l'organe d'injection associé.

Chaque vanne commandée peut être une vanne débitmétrique mais peut aussi être une simple électrovanne.

Selon une possibilité, le système de circulation de fluide peut comporter un clapet de surpression d'isolation en aval d'une entrée dudit circuit de secours, ledit clapet de surpression d'isolation étant dimensionné pour se fermer lorsque ledit fluide alimente un dit organe d'injection.

Dans ce cas, lorsque le fluide est envoyé dans un moteur thermique via un organe d'injection, la pression du fluide à l'entrée du clapet de surpression d'isolation baisse. Le clapet de surpression stoppe automatiquement la circulation du fluide dans le circuit fluidique. Le fluide est alors uniquement utilisé pour obtenir un surcroît de puissance avec le moteur thermique alimenté en fluide.

Alternativement, le fluide peut aussi circuler dans le circuit fluidique.

Selon un autre aspect, il est également possible d'utiliser un distributeur hydraulique du circuit fluidique afin d'effectuer le transfert du fluide vers un moteur thermique.

Selon une possibilité, le dispositif de distribution peut comporter un distributeur hydraulique d'assistance du circuit fluidique, le distributeur hydraulique d'assistance ayant au moins une voie de secours par organe d'injection, chaque voie de secours étant en communication fluidique avec un organe d'injection.

En présence d'un tel distributeur hydraulique d'assistance, l'expression « circuit de secours comprenant un dispositif de distribution contrôlé par un contrôleur pour autoriser sur commande une circulation du fluide vers ledit organe d'injection » signifie que le contrôleur pilote le distributeur hydraulique d'assistance pour que la voie requise mette en communication le circuit fluidique et un organe d'injection.

Le distributeur hydraulique d'assistance est donc agencé entre un secteur amont du circuit fluidique et un secteur aval cheminant dans la section du véhicule dans laquelle l'air doit être réchauffé ou refroidi.

Le distributeur hydraulique d'assistance peut être un organe dédié par exemple agencé en aval de la ou des pompes, ou peut exercer d'autres fonctions.

Par exemple, ledit distributeur hydraulique d'assistance est une partie d'un distributeur hydraulique de régulation ayant une voie de réchauffage apte à être connectée fluidiquement à un réchauffeur configuré pour réchauffer ledit fluide au sein dudit système de circulation de fluide et/ou ledit distributeur hydraulique ayant une voie de refroidissement apte à être connectée fluidiquement à un refroidisseur configuré pour refroidir ledit fluide au sein dudit système de circulation de fluide. Par exemple, le secteur amont comporte alors une conduite de réchauffage sortant d'une boucle de réchauffement et une conduite de refroidissement sortant d'une boucle de refroidissement du fluide.

Le cas échéant, le contrôleur peut aussi piloter le distributeur hydraulique de régulation pour gérer si besoin la température du fluide envoyé dans un moteur thermique. À cet effet, le contrôleur peut communiquer avec au moins un capteur de température mesurant la température du fluide, au sein du circuit fluidique ou du circuit de secours.

Selon une possibilité compatible avec les précédentes, le système de circulation de fluide pouvant avoir un réchauffeur configuré pour réchauffer ledit fluide au sein dudit système de circulation de fluide, ledit système de circulation de fluide pouvant avoir un refroidisseur configuré pour refroidir ledit fluide au sein dudit système de circulation de fluide, ledit contrôleur peut être relié par une liaison de commande de température, filaire ou non filaire, au réchauffeur ainsi qu'au refroidisseur et à un capteur de température mesurant une température dudit fluide, ledit contrôleur étant configuré pour piloter une température dudit fluide en pilotant le réchauffeur et le refroidisseur.

Le contrôleur peut être configuré pour appliquer une loi permettant de piloter le réchauffeur et le refroidisseur afin d'atteindre au sein du fluide envoyé dans le moteur thermique, si besoin, une température comprise dans une plage mémorisée.

Selon une possibilité compatible avec les précédentes, le contrôleur peut être relié par une liaison de commande de débit filaire ou non filaire à ladite au moins une pompe, ledit contrôleur étant configuré pour piloter ladite au moins une pompe au moins en cas d'alimentation en fluide d'un organe d'injection.

La fonction régulation du débit du fluide transmis à un organe d'injection peut être gérée par une modification de la vitesse de rotation des pompes. Le contrôleur peut être configuré pour piloter chaque pompe afin de la faire fonctionner à une vitesse mémorisée. Le système ne nécessite donc pas l'ajout d'une vanne débitmétrique.

Par exemple, les pompes utilisées sont des électropompes dont le débit peut être régulé.

Ainsi, les pompes peuvent être contrôlées pour que le fluide circule selon un premier débit lorsque les organes d'injection ne sont pas alimentés fluidiquement en fluide et un deuxième débit, différent du premier débit, lorsqu'un organe d'injection est fluidiquement alimenté en fluide.

Selon une possibilité compatible avec les précédentes, le véhicule peut comporter un senseur de puissance mesurant une puissance courante développée par l'installation motrice, ledit contrôleur étant relié au senseur de puissance, ledit véhicule comportant au moins deux dits moteurs thermiques, le contrôleur étant configuré pour commander ledit dispositif de distribution afin d'alimenter en fluide un desdits moteurs thermiques si la puissance courante avant une panne de l'autre moteur thermique est supérieure à une puissance mémorisée.

Si la puissance requise au moment de la panne d'un moteur thermique est supérieure au maximum de la puissance que peut fournir un moteur thermique en temps normal, à savoir en l'absence d'injection du fluide, alors le contrôleur pilote un dispositif de distribution pour obtenir un surcroît de puissance à l'aide du fluide.

Selon une possibilité compatible avec les précédentes, ledit organe d'injection peut être configuré pour projeter ledit fluide dans une entrée d'air d'un dit moteur thermique.

Un organe d'injection peut se trouver dans l'entrée d'air ou peut être dirigée vers l'entrée d'air. L'expression « entrée d'air » désigne un système dirigeant de l'air vers un « bloc moteur", et par exemple vers un compresseur d'un turbomoteur. L'entrée d'air peut comprendre une bouche d'air, un conduit, des filtres....

Selon une possibilité compatible avec les précédentes, le circuit de secours peut comporter un système de filtration en amont dudit organe d'injection, et donc en amont du ou des organes d'injection le cas échéant.

Un tel système de filtration peut comprendre un filtre voire une conduite de dérivation. En effet, des particules peuvent circuler au sein du fluide dans un système de conditionnement d'air. Le filtre évite alors l'obturation du ou des organes d'injection par ces particules.

Selon une possibilité compatible avec les précédentes, le circuit de secours peut comporter une vanne de purge par organe d'injection, indépendamment du nombre d'organe d'injection. Les vannes de purge visent à éviter la présence d'air dans les lignes d'injection.

En effet, le circuit de secours peut toujours comprendre du fluide, y compris en dehors de la phase d'assistance, afin de pouvoir assister un moteur très rapidement lors d'une telle phase d'assistance.

Selon une possibilité compatible avec les précédentes, le circuit de secours peut comporter au moins un capteur de pression de secours pour mesurer une pression de secours dudit fluide dans le circuit de secours, ledit contrôleur communiquant avec le capteur de pression de secours, ledit contrôleur étant configuré pour au moins émettre une alarme ou ne pas mettre en oeuvre une phase d'assistance si la pression de secours est inférieure à un seuil de pression de fonctionnement.

Par exemple, au moins une conduite du circuit de secours peut toujours contenir une partie dudit fluide. Le capteur de pression de secours peut détecter une chute de pression due à une fuite dans le circuit de secours. Le contrôleur peut alors notamment déclencher une alarme, en transmettant un signal à un alerteur, pour prévenir l'équipage que le système d'injection de fluide dans le ou les moteurs thermiques est défaillant.

Selon une possibilité compatible avec les précédentes, le système de circulation de fluide peut comporter un réservoir pour contenir une partie du fluide.

Par exemple, le système de circulation de fluide peut comporter une réservoir à deux compartiments reliés chacun fluidiquement à ladite au moins une pompe par un répartiteur hydraulique qui est commandé par ledit contrôleur, lesdits deux compartiments comprenant un compartiment principal et un compartiment de secours alimenté en fluide par le compartiment principal, par exemple par gravité, ledit système de circulation de fluide comportant un capteur de pression principal mesurant une pression principale dudit fluide, ledit contrôleur communiquant avec le capteur de pression principal, le contrôleur étant configuré pour piloter le répartiteur hydraulique pour puiser ledit fluide uniquement dans le compartiment principal lorsque la pression principale est supérieure à un seuil de pression de fuite et dans le compartiment de secours lorsque la pression principale est inférieure ou égal au seuil de pression de fuite.

Par exemple, le capteur de pression principal est agencé au sein du circuit fluidique en aval de la section du véhicule à réchauffer ou à refroidir.

Cette caractéristique permet de contenir une partie du fluide dans le compartiment de secours, afin d'avoir éventuellement une réserve de fluide en cas de fuite hydraulique dans le système de conditionnement d'air.

Selon une possibilité compatible avec les précédentes, ledit système de circulation de fluide peut comporter un circuit de décharge débouchant sur ledit réservoir, le circuit de décharge étant muni d'un clapet de surpression de décharge configuré pour s'ouvrir lorsque le répartiteur hydraulique puise le fluide dans le compartiment de secours et lorsqu'aucun organe d'injection n'est alimenté en fluide.

Eventuellement, et notamment en présence d'un réservoir à deux compartiments, ce système peut permettre de faire fonctionner dans de bonnes conditions les pompes. En cas de fuites et en dehors de la phase d'assistance, les pompes peuvent fonctionner correctement en puisant le fluide dans le compartiment de secours via le répartiteur hydraulique, le fluide retournant dans le réservoir par le circuit de décharge tant qu'une phase d'assistance n'est pas initiée, pour minimiser les risques de perdre la totalité du fluide en fonction de la localisation de la fuite.

Ainsi et en fonction de la localisation de la fuite, les pompes ne fonctionnent pas à vide et une partie du fluide demeure dans le système malgré la fuite.

Par exemple, le système de circulation de fluide peut comporter une conduite intermédiaire reliant ladite au moins une pompe au répartiteur hydraulique, ledit répartiteur hydraulique mettant en communication fluidique ladite au moins une pompe et le circuit fluidique uniquement lorsque la pression principale est supérieure au seuil de pression de fuite.

Outre un véhicule, l'invention vise un procédé appliqué par ce véhicule.

L'invention vise ainsi un procédé d'assistance pour assister une installation motrice d'un véhicule, ladite installation motrice ayant au moins un moteur thermique, ledit véhicule ayant un système de conditionnement d'air pour contrôler une température d'un air dans une section du véhicule, ledit système de conditionnement d'air comprenant un fluide circulant dans un système de circulation de fluide, le système de circulation de fluide comprenant un circuit fluidique cheminant dans le véhicule, ledit système de circulation de fluide comprenant au moins une pompe configurée pour faire circuler ledit fluide dans ledit circuit fluidique.

Ce procédé comporte une phase d'assistance d'un moteur thermique à assister parmi ledit au moins un moteur thermiques comprenant l'étape suivante : activation, sur commande d'un contrôleur, d'un dispositif de distribution présent dans un circuit de secours liant fluidiquement le système de circulation de fluide et un organe d'injection dudit moteur thermique à assister pour acheminer ledit fluide jusqu'à l'organe d'injection alimentant en fluide ledit moteur thermique à assister.

Eventuellement, le véhicule pouvant comprendre au moins deux moteurs thermiques, le procédé peut comporter une étape de détection d'une panne d'un moteur thermique parmi lesdits au moins deux moteurs thermiques, ladite phase d'assistance étant mise en oeuvre pour le moteur thermique en fonctionnement suite à ladite détection d'une panne d'un moteur thermique.

Eventuellement, le procédé peut comporter une étape de mesure d'une puissance développée par l'installation motrice.

L'invention et ses avantages apparaîtront avec plus de détails dans le cadre de la description qui suit avec des exemples donnés à titre illustratif en référence aux figures annexées qui représentent :
la figure 1, un schéma illustrant un exemple d'un véhicule selon l'invention ayant un dispositif de distribution comprenant des vannes commandées,
la figure 2, un schéma illustrant un véhicule selon l'invention ayant un dispositif de distribution comprenant des voies d'un distributeur hydraulique, et
la figure 3, un schéma illustrant un exemple d'un véhicule selon l'invention ayant un dispositif de distribution à vannes commandées.

Les éléments présents dans plusieurs figures distinctes sont affectés d'une seule et même référence.

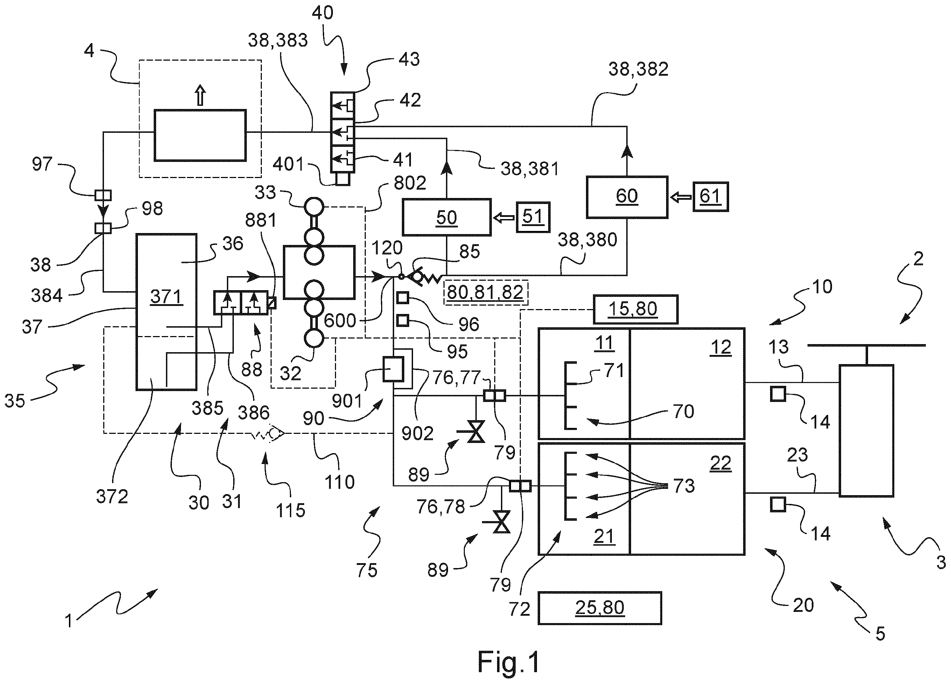

La figure 1, la figure 2 et la figure 3 illustrent des véhicules 1 selon l'invention et à titre d'exemple des aéronefs. En particulier, le véhicule 1 peut être un giravion muni d'une voilure tournante. Alternativement, le véhicule peut être un véhicule terrestre ou maritime par exemple.

Quelle que soit la réalisation et en référence à la figure 1 par exemple, le véhicule 1 comporte une installation motrice 5. Par exemple, le véhicule 1 comporte des pales d'un rotor ou d'une hélice mises en rotation par l'installation motrice 5. Selon l'exemple illustré, le véhicule 1 peut comprendre une voilure tournante 2 mise en mouvement par une chaîne de transmission de puissance 3, cette chaîne de transmission de puissance 3 étant elle même mise en mouvement par l'installation motrice 5.

Indépendamment de la nature des organes mis en mouvement par l'installation motrice 5, cette installation motrice 5 comporte au moins un voire au moins deux moteurs thermiques 10, 20 pour mettre en mouvement ces organes. L'expression « moteur thermique » désigne un moteur fonctionnant à l'aide d'un carburant, par exemple un turbomoteur ou un moteur à pistons.

L'expression « chaque moteur thermique » est utilisée indépendamment du nombre de moteur thermique, à savoir en présence d'un ou plusieurs moteurs thermiques.

Chaque moteur thermique 10, 20 peut comporter une entrée d'air 11, 21 injectant de l'air dans un bloc moteur 12, 22. Sur un turbomoteur, l'entrée d'air 11, 21 peut déboucher sur un générateur de gaz. Chaque moteur thermique 10, 20 comporte, en outre, un arbre de travail 13, 23 mettant en mouvement les organes requis. Les arbres de travail 13, 23 mettent en mouvement la chaîne de transmission de puissance 3 selon l'exemple illustré.

Chaque moteur thermique 10, 20 peut être contrôlé par un calculateur moteur 15, 25 usuel. Un unique calculateur moteur 15, 25 peut piloter le fonctionnement de plusieurs moteurs thermiques 10, 20 ou uniquement le fonctionnement d'un moteur thermique 10, 20 selon l'exemple illustré. De manière usuelle, chaque calculateur moteur 15, 25 peut déterminer si un moteur thermique 10, 20 est en panne. Un des calculateurs moteur 15, 25 peut être un calculateur maître.

Par ailleurs, le véhicule 1 peut comprendre un senseur de puissance 14 mesurant la puissance développée par l'installation motrice 5. Par exemple, le senseur de puissance 14 comporte un couplemètre et un capteur de vitesse de rotation agencés sur chaque arbre de travail 13, 23 de chaque moteur thermique, et un calculateur traitant les mesures. La puissance développée par l'installation motrice 5 est alors égale le cas échéant à la somme des puissances développées par les arbres de travail 13, 23. Par exemple, un calculateur voire un des calculateur moteur 15, 25 calcule la puissance développée par l'installation motrice 5 en exploitant les signaux transmis par chaque capteur du senseur de puissance 14.

Indépendamment de ces caractéristiques, le véhicule 1 comporte un système 30 de conditionnement d'air pour contrôler une température de l'air présent dans une section 4 du véhicule 1. Par exemple, cette section 4 comporte une cabine et/ou un cockpit.

Le système 30 de conditionnement d'air comprend un fluide 36 circulant dans un système 31 de circulation de fluide. Le fluide 36 peut comporter un mélange d'eau et de glycol.

Dès lors, le système 31 de circulation de fluide comprend un circuit fluidique 35 cheminant dans le véhicule 1 et au moins une pompe 32, 33 configurée pour faire circuler ledit fluide 36 dans le circuit fluidique 35. En particulier, le système 31 de circulation de fluide peut posséder, par sécurité, au moins deux pompes 32, 33, par exemple agencées en parallèle.

Le circuit fluidique 35 est en outre muni de multiples éléments pour faire circuler le fluide 36 dans la section 4adéquat. Le système 31 de circulation de fluide peut notamment comporter de multiples conduites 38, et en particulier au moins une conduite de conditionnement d'air 383 cheminant dans la section 4. Le terme « conduite » désigne un ou plusieurs tuyaux dans lesquels circule le fluide 36.

En outre, le système 31 de circulation de fluide peut comporter un réservoir 37 apte à stocker une partie du fluide 36. La ou les pompes 32,33 aspirent le fluide 36 dans le réservoir 37 et le propulse dans le circuit fluidique 35. Le fluide 36 atteint la section 4 puis retourne dans le réservoir 37.

Indépendamment de la présence d'un réservoir, le système 31 de circulation de fluide peut comprendre un réchauffeur 50 et/ou un refroidisseur 60 disposés en amont de la section 4, et le cas échéant en aval de la ou des pompes 32,33.

Il est à noter que les termes « amont » et « aval » font référence à un sens de circulation du fluide 36.

Le réchauffeur 50 peut prendre une forme usuelle pour réchauffer le fluide 36 à l'aide d'une source chaude 51 du véhicule 1, un compartiment moteur par exemple. Le réchauffeur 50 est par exemple agencé entre une conduite d'acheminement 380 alimentée fluidiquement par la ou les pompes 32,33, et une conduite de réchauffement 381 dirigée vers la conduite de conditionnement d'air 383.

Le refroidisseur 60 peut prendre une forme usuelle pour refroidir le fluide 36 à l'aide d'une source froide 61 du véhicule 1. Le refroidisseur 60 est agencé entre la conduite d'acheminement 380, et une conduite de refroidissement 382 dirigée vers la conduite de conditionnement d'air 383.

Dès lors, le circuit fluidique 35 peut comporter un distributeur hydraulique de régulation 40 disposé entre la conduite de conditionnement d'air 383 et les conduites de réchauffage 381 et de refroidissement 382. Le distributeur hydraulique de régulation 40 peut comprendre diverses voies, à savoir divers chemins hydrauliques formés possiblement dans un tiroir de ce distributeur hydraulique de régulation 40. Le distributeur hydraulique de régulation 40 est commandable de manière usuelle afin de mettre en oeuvre la ou les voies adéquates à chaque instant. Les figures illustrent à titre illustratif un distributeur à tiroir comprenant une partie mobile pouvant être par exemple déplacée par un actionneur 401.

Le distributeur hydraulique 40 peut comprendre au minimum une voie de réchauffage 41 apte à être connectée fluidiquement au réchauffeur 50, par exemple en mettant en communication fluidique la conduite de réchauffage 381 et la conduite de conditionnement d'air 383. Le distributeur hydraulique 40 peut comprendre au minimum une voie de refroidissement 42 apte à être connectée fluidiquement au refroidisseur 60, en mettant en communication fluidique la conduite de refroidissement 382 et la conduite de conditionnement d'air 383. Eventuellement, le distributeur hydraulique 40 peut comprendre une voie tempérée 43 mettant en communication fluidique la conduite de conditionnement d'air 383 avec la conduite de réchauffage 381 et la conduite de refroidissement 382.

Par exemple, les pompes 32,33 sont reliées fluidiquement au réservoir 37 et sont connectées fluidiquement au réchauffeur 50 et au refroidisseur 60 par la conduite d'acheminement 380. Le réchauffeur 50 et le refroidisseur 60 sont connectés fluidiquement au distributeur hydraulique de régulation 40 respectivement par la conduite de réchauffement 381 et la conduite de refroidissement 382. Le distributeur hydraulique de régulation 40 débouche alors sur la conduite de conditionnement d'air 383 qui est suivie d'une conduite de retour 384 débouchant sur le réservoir 37.

Le fluide 36 peut alors traverser la ou les pompes 32,33 et être injecté dans le réchauffeur 50 et le refroidisseur 60 avant d'atteindre le distributeur hydraulique de régulation 40. Le distributeur hydraulique de régulation 40 dirige alors, dans des conditions normales, le fluide 36 réchauffé et/ou refroidi dans la conduite de conditionnement d'air 383. Le fluide 36 retourne alors dans le réservoir 37 par la conduite de retour 384.

Indépendamment de ces aspects et notamment des caractéristiques du système 30 de conditionnement d'air, le véhicule 1 est muni d'un système d'assistance permettant d'augmenter la puissance délivrée par le ou les moteurs thermiques 10, 20 éventuels à l'aide du fluide 36.

Ce système d'assistance comporte un organe d'injection 70, 72 par moteur thermique 10, 20. Chaque organe d'injection 70, 72 est configuré pour pouvoir injecter le fluide 36 dans le moteur thermique 10, 20 associé. En particulier, chaque organe d'injection 70, 72 peut diriger le fluide 36 dans une entrée d'air 11, 21 du moteur thermique 10, 20 correspondant. A cet effet, chaque organe d'injection 70, 72 peut comporter un ou plusieurs tuyaux, un ou plusieurs gicleurs 71, 73...

Le système d'assistance comporte en outre un circuit de secours 75 connectant fluidiquement le système 31 de circulation de fluide à chaque organe d'injection 70, 72. Outre au moins une conduite, le circuit de secours 75 possède un dispositif de distribution 76 configuré pour autoriser ou interdire sur requête la circulation du fluide 36 vers les organes d'injection 70, 72. Eventuellement, le circuit de secours 75 peut comporter une vanne de purge 89 par organe d'injection 70, 72, reliée à une conduite débouchant sur cet organe d'injection 70,72.

Le circuit de secours 75 peut comporter un système de filtration 90 en amont du ou des organes d'injection 70,72. Un tel système de filtration 90 peut comporter au moins un filtre. Par exemple un filtre comporte un moyen filtrant 901, et éventuellement une conduite de dérivation 902.

En présences de plusieurs organes d'injection 70, 72, un tel système de filtration 90 peut comporter un filtre 901, 902 sur une conduite commune à tous les organes d'injection 70, 72, ou un filtre 901, 902 par organe d'injection 70,72 en l'absence de conduite commune.

Selon une autre caractéristique, le dispositif de distribution 76 est contrôlé par un contrôleur 80. Le contrôleur 80 est configuré pour transmettre un signal de commande au dispositif de distribution 76 pour autoriser sur commande la circulation du fluide 36 vers un organe d'injection 70, 72, si nécessaire. Le contrôleur 80 peut notamment piloter le distributeur hydraulique de régulation 40, au moins durant une phase d'assistance.

Le contrôleur 80 peut comprendre par exemple au moins un processeur et au moins une mémoire, au moins un circuit intégré, au moins un système programmable, au moins un circuit logique, ces exemples ne limitant pas la portée donnée à l'expression « contrôleur ». Le terme processeur peut désigner aussi bien une unité centrale de traitement connue sous l'acronyme CPU, une unité graphique de traitement GPU, une unité digitale connue sous l'acronyme DSP, un microcontrôleur...

Le contrôleur 80 peut comprendre un calculateur 82, voire au moins un calculateur moteur 15, 25 et éventuellement le calculateur maître voire tous les calculateurs moteur 15,25. Par exemple, chaque calculateur moteur 15,25 est configuré pour remplir la fonction du contrôleur 80 en présence d'une panne soit du moteur thermique 10,20 qu'il contrôle, soit de l'autre moteur thermique 10,20 sur un véhicule multimoteur par exemple. Si le contrôleur 80 comporte un calculateur 82 distinct du ou des calculateurs moteur 15, 25, le ou les calculateurs moteur 15, 25 sont configurés pour transmettre un signal au contrôleur 80 lorsqu'un moteur thermique 10,20 est détecté en panne.

Un tel contrôleur 80, et notamment au moins un calculateur du contrôleur, peut être relié au senseur de puissance 14. Dès lors, le contrôleur 80 d'un véhicule multimoteur peut être configuré pour transmettre un signal de commande au dispositif de distribution 76 durant une phase d'assistance, afin d'alimenter en fluide 36 un des moteurs thermiques 10, 20, si la puissance courante avant une panne de l'autre moteur thermique 10,20 est supérieure à une puissance mémorisée dans le contrôleur ou ailleurs. Sur un véhicule monomoteur, le contrôleur 80 peut déclencher une phase d'assistance si la puissance courante est supérieure à une puissance mémorisée.

Le contrôleur 80, et notamment au moins un calculateur du contrôleur, peut communiquer avec au moins un capteur de température 95, 97 mesurant la température du fluide 36 dans le circuit de secours 75, voire dans le circuit fluidique 35 par exemple.

Le cas échéant, le contrôleur 80 peut être relié par une liaison de commande de température, filaire ou non filaire, au réchauffeur 50 et au refroidisseur 60. Le contrôleur 80 est alors configuré pour piloter la température du fluide 36 notamment en pilotant le réchauffeur 50 et le refroidisseur 60, voire le distributeur hydraulique de régulation 40, en fonction de la ou des températures mesurées par le ou les capteurs de température 95, 97.

Le contrôleur 80, et notamment au moins un calculateur du contrôleur, peut être relié par une liaison 802 de commande de débit, filaire ou non filaire, à chaque pompe 32, 33. Le contrôleur 80 est alors configuré pour piloter chaque pompe 32, 33 lors d'une phase d'assistance, afin d'atteindre un débit adéquat de fluide 36. Par exemple, le contrôleur 80 transmet un signal aux pompes 32,33, ce signal étant porteur d'une vitesse de rotation qu'un élément tournant des pompes 32,33 doit atteindre.

Selon une autre caractéristique optionnelle, le circuit de secours 75 peut comporter au moins un capteur de pression de secours 96 communiquant par une liaison filaire ou non filaire avec le contrôleur 80. Chaque capteur de pression de secours 96 transmet un signal porteur d'une pression dite « pression de secours » du fluide 36 dans le circuit de secours 75.

Eventuellement, le contrôleur 80, et notamment au moins un calculateur du contrôleur, peut communiquer avec un alerteur non illustré, apte à générer une alerte sonore, visuelle, tactile... Si la pression de secours est inférieure à un seuil de pression de fonctionnement, le contrôleur 80 est configuré pour transmettre un signal à l'alerteur afin d'émettre une alarme et/ou ne pas mettre en oeuvre une phase d'assistance.

Selon une autre caractéristique optionnelle, le réservoir 37 éventuel peut comprendre un unique contenant. Selon les exemples illustrés, le réservoir 37 peut comprendre deux compartiments 371, 372 reliés chacun fluidiquement à la ou les pompes 32, 33 par un répartiteur hydraulique 88. Ainsi, le réservoir 37 peut avoir un compartiment principal 371 alimenté en fluide par le circuit fluidique 35 et un compartiment de secours 372 alimenté en fluide 36 par le compartiment principal 371. Le répartiteur hydraulique 88 est alors relié fluidiquement par deux conduites d'acheminement 385, 386 respectivement au compartiment principal 371 et au compartiment de secours 372.

De plus, le système 31 de circulation de fluide comporte un capteur de pression principal 98 mesurant une pression principale du fluide 36, par exemple au sein de la conduite de retour 384 présente en amont du réservoir 37 et à la sortie de la section 4 du véhicule.

Le contrôleur 80, et notamment au moins un calculateur du contrôleur, communique avec le capteur de pression principal 98. Dès lors, le contrôleur 80 peut être configuré pour piloter un actionneur 881 du répartiteur hydraulique 88 afin de puiser le fluide 36 uniquement dans le compartiment principal 371 lorsque la pression principale est supérieure à un seuil de pression de fuite et dans le compartiment de secours 372 lorsque la pression principale est inférieure ou égal au seuil de pression de fuite. Selon l'exemple illustré, le répartiteur hydraulique 88 peut être un distributeur ayant un tiroir rendu mobile par l'actionneur 881.

Selon une autre caractéristique optionnelle et notamment en présence d'un réservoir 37 à deux compartiments, le système 31 de circulation de fluide peut comporter en aval de la ou des pompes 32, 33 un circuit de décharge 110 débouchant sur ledit réservoir 37. Un tel circuit de décharge 110 peut posséder un clapet de surpression de décharge 115 configuré pour s'ouvrir lorsque le répartiteur hydraulique 88 puise le fluide dans le compartiment de secours 372 et lorsque le ou les organes d'injection 70, 72 ne sont pas alimentés en fluide.

Selon un autre aspect, le contrôleur 80 peut comporter une interface homme-machine 81 afin qu'un pilote puisse commander l'injection de fluide 36 dans un moteur thermique 10, 20 si besoin. Par exemple, l'interface homme-machine 81 peut comprendre un écran tactile, un bouton ou un équivalent... Par exemple, l'interface homme-machine 81 peut être activée par un individu dans une situation d'urgence, durant une phase d'entraînement, durant une visite d'avant-vol dans un but de vérification de fonctionnement, durant une action de maintenance...

Ainsi, le contrôleur 80 peut comprendre au moins un calculateur configuré pour effectuer une ou plusieurs des actions précédentes et/ou une interface homme-machine.

Indépendamment de ces diverses possibilités et selon la réalisation de la figure 1, le circuit de secours 75 est connecté fluidiquement à une conduite du circuit fluidique 35 et à la conduite d'acheminement 380 selon l'exemple illustré. Eventuellement, un clapet de surpression d'isolation 85 peut être agencé dans la conduite d'acheminement 380 en aval de la connexion au circuit de secours 75. Le clapet de surpression d'isolation 85 peut alors être dimensionné pour se fermer lorsque le fluide 36 alimente un organe d'injection 70, 72. La pression obtenue à l'entrée du clapet de surpression d'isolation 85, dans ces conditions, peut être calculée de manière usuelle pour dimensionner le clapet de surpression d'isolation 85.

Selon cette réalisation de la figure 1, le dispositif de distribution 76 peut comporter des vannes commandées 77, 78 agencées respectivement dans le circuit de secours 75 en amont des organes d'injection 70, 72. Chaque vanne commandée 77,78 présente un bloqueur 79 déplaçable, sur ordre du contrôleur 80, d'une position ouverte à une position fermée. Par exemple, chaque vanne commandée 77,78 est une électrovanne, le contrôleur 80 transmettant un signal électrique à la vanne commandée 77,78 pour l'ouvrir ou la fermer. Chaque vanne commandée 77,78 est alors reliée fluidiquement au circuit fluidique 35 par une conduite amont et à un organe d'injection 70, 72 par une conduite aval.

Dès lors, une partie du fluide 36 est en permanence dans la conduite de secours, en amont des vannes commandées 77, 78.

Dans un mode de fonctionnement normal, le fluide 36 circule au sein du circuit fluidique 35. En présence d'un capteur de pression principal 98 et d'un réservoir 37 à deux compartiments, le contrôleur 80 surveille la pression principale du fluide 36 à l'aide du capteur de pression principal 98. Le répartiteur hydraulique 88 puise le fluide dans le compartiment principal 371. Si le circuit fluidique 35 fuit, la pression dans ce circuit fluidique 35 chute. Dès que la pression principale mesurée par le capteur de pression principal 98 devient inférieure à un seuil de pression de fuite, le contrôleur 80 pilote le répartiteur hydraulique 88 pour puiser le fluide dans le compartiment de secours 372. Eventuellement, le contrôleur 80 peut piloter une vanne annexe 120 pour diriger le fluide vers le circuit de secours 75, afin qu'il retourne dans le réservoir 37 via le circuit de décharge 110. Une telle vanne annexe peut être positionnée en aval d'une bifurcation 600 débouchant sur le circuit de décharge 110 et au plus près de ce circuit de décharge 110. La ou les pompes 32,33 restent ainsi en fonctionnement et le fluide 36 ne circule plus vers le circuit possiblement à l'origine de la fuite. Indépendamment de ces aspects, lors de la phase d'assistance, le contrôleur 80 pilote alors une vanne commandée 77, 78 du dispositif de distribution 76 pour alimenter en fluide un moteur thermique 10,20 en fonctionnement.

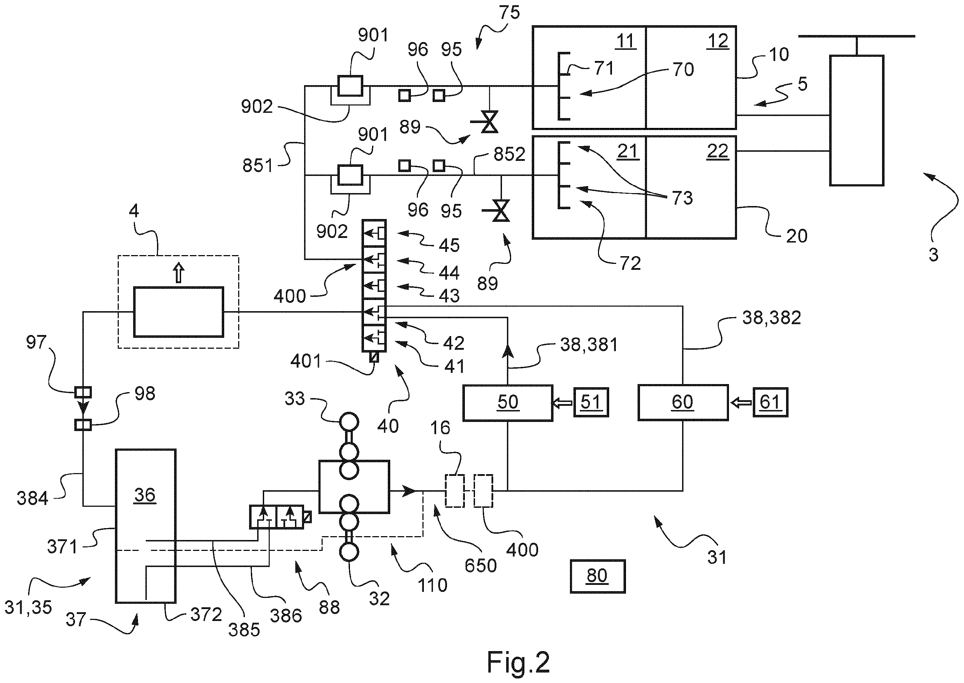

Selon la réalisation de la figure 2, le dispositif de distribution 76 peut comporter un distributeur hydraulique d'assistance 400 connecté au circuit fluidique 35. Le distributeur hydraulique d'assistance 400 peut avoir au moins une voie de secours 44, 45 par organe d'injection 70, 72, chaque voie de secours 44, 45 étant en communication fluidique avec un organe d'injection 70, 72 via une ligne d'injection 851, 852. Comme indiqué précédemment, chaque ligne d'injection 851, 852 peut comprendre un filtre 901, 902, un capteur de température 95, un capteur de pression de secours 96, une vanne de purge 89.

Eventuellement, le distributeur hydraulique d'assistance 400 peut être une partie du distributeur hydraulique de régulation 40. Chaque voie de secours 44, 45 peut mettre en liaison fluidique la conduite de réchauffage 381 et/ou la conduite de refroidissement 382 avec un organe d'injection 70, 72.

Selon l'illustration représentée en pointillés, le distributeur hydraulique d'assistance 400 peut être un distributeur indépendant, par exemple agencé à la sortie de la ou des pompes 32, 33.

Eventuellement, une vanne annexe 16 est interposée avant le distributeur hydraulique d'assistance 400, par exemple en aval d'une bifurcation 650 débouchant sur un circuit de décharge 110.

Dans un mode de fonctionnement normal, le fluide 36 circule au sein du circuit fluidique. En présence d'un capteur de pression principal 98 ainsi que d'un réservoir 37 à deux compartiments et par exemple d'un distributeur hydraulique d'assistance 400 indépendant, le contrôleur 80 surveille la pression principale du fluide 36 à l'aide du capteur de pression principal 98. Le répartiteur hydraulique 88 puise le fluide dans le compartiment principal 371. Si le circuit fluidique 35 fuit, la pression dans ce circuit fluidique 35 chute. Dès que la pression mesurée par le capteur de pression principal 98 devient inférieure à un seuil de pression de fuite, le contrôleur 80 pilote le répartiteur hydraulique 88 pour puiser le fluide dans le compartiment de secours 372. Le contrôleur 80 peut aussi piloter la vanne annexe 16 pour la fermer. Le fluide retourne dans le réservoir 37 via le circuit de décharge 110. La ou les pompes 32,33 restent ainsi en fonctionnement et le fluide 36 ne circule plus vers le circuit possiblement à l'origine de la fuite. Indépendamment de cette possibilité, lors de la phase d'assistance, le contrôleur 80 pilote alors le distributeur hydraulique d'assistance 400, voire ouvre la vanne annexe 16 pour alimenter en fluide un moteur thermique 10,20 en fonctionnement.

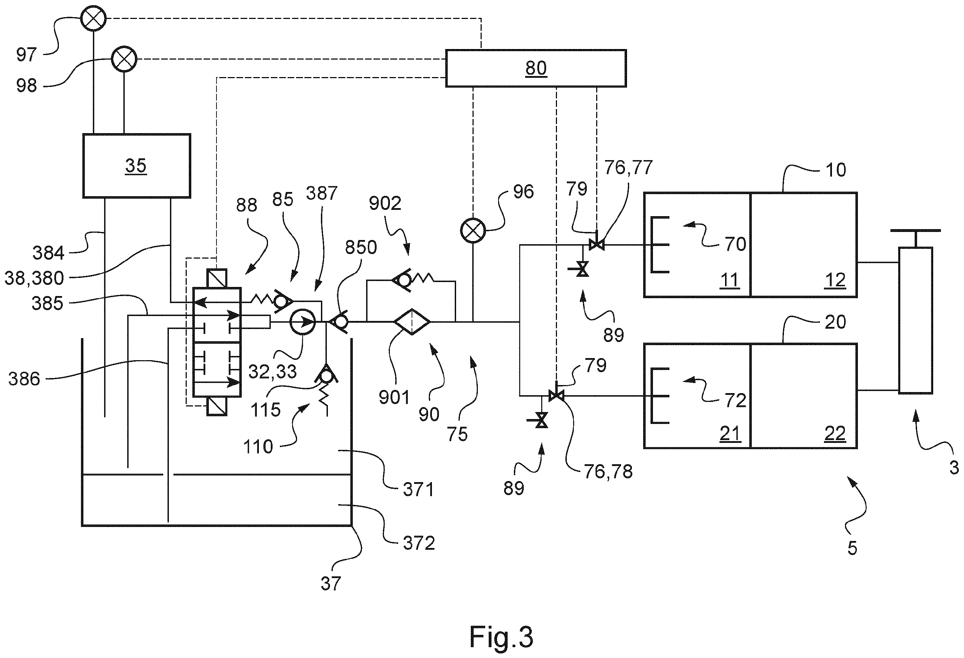

La figure 3 illustre une réalisation comprenant, à l'instar de la réalisation de la figure 1, un dispositif de distribution 76 comportant des vannes commandées 77, 78 agencées respectivement dans le circuit de secours 75 en amont du ou des organes d'injection 70, 72.

En outre, la réalisation de la figure 3 comporte obligatoirement un réservoir 37 à deux compartiments 371,372, et un répartiteur hydraulique 88. En outre, une conduite intermédiaire 387 est par exemple muni d'un clapet de surpression d'isolation 85. Indépendamment de cette possibilité, la conduite intermédiaire 387 relie les pompes 32, 33 au répartiteur hydraulique 88. Ce répartiteur est muni d'une voie apte à mettre en communication fluidique la ou les pompes 32, 33 et le circuit fluidique 35 uniquement lorsque la pression principale est supérieure au seuil de pression de fuite. Le circuit de secours peut en outre comporter une valve antiretour 850.

Dans un mode de fonctionnement normal, le fluide 36 circule au sein du circuit fluidique 35. En présence d'un capteur de pression principal 98 et d'un réservoir 37 à deux compartiments 371,372, le contrôleur 80 surveille la pression du fluide 36 à l'aide du capteur de pression principal 98. Le répartiteur hydraulique 88 puise le fluide 36 dans le compartiment principal 371. Si le circuit fluidique 35 fuit, la pression principale dans ce circuit fluidique 35 chute. Dès que la pression principale mesurée par le capteur de pression principal 98 devient inférieure au seuil de pression de fuite, le contrôleur 80 pilote le répartiteur hydraulique 88 pour puiser le fluide dans le compartiment de secours 372. Dans cette position, le répartiteur hydraulique 88 isole la conduite intermédiaire 387 du circuit fluidique 35. Le fluide 36 retourne alors dans le réservoir 37 via le circuit de décharge 110. La ou les pompes 32,33 restent ainsi en fonctionnement et le fluide 36 ne circule plus vers le circuit fluidique possiblement à l'origine de la fuite. Indépendamment de ces aspects, lors de la phase d'assistance, le contrôleur 80 pilote alors une vanne commandée 77, 78 du dispositif de distribution pour alimenter en fluide un moteur thermique 10,20 en fonctionnement. Le clapet de surpression 115 du circuit de décharge se ferme et le fluide est acheminé du compartiment de secours 372 vers un organe d'injection.

Quelle que soit la réalisation et durant une phase de fonctionnement par défaut, le dispositif de distribution 76 est dans un mode fermé, le ou les organes d'injection 70, 72 ne sont alors pas en liaison fluidique avec le circuit fluidique 35. Les pompes 32,33 sont actives et le fluide 36 circule dans le circuit fluidique 35.

Si besoin, une phase d'assistance d'un moteur thermique 10,20 peut être mise en oeuvre. Par exemple, la phase d'assistance est initiée par le contrôleur 80 en cas de panne d'un moteur thermique 10, 20, voire en présence d'une panne d'un moteur thermique et/ou d'une puissance nécessaire supérieure à une puissance mémorisée, sur ordre d'un individu via l'interface homme-machine...

Durant cette phase d'assistance, le contrôleur 80 transmet un signal au dispositif de distribution 76 pour alimenter en fluide un organe d'injection 70, 72. Sur un véhicule multimoteur, en cas de panne d'un moteur thermique 10,20, le dispositif de distribution 76 est piloté par le contrôleur 80 pour alimenter l'organe d'injection 70,72 d'un autre moteur thermique 10,20 encore en fonctionnement. Selon les figures 1 et 3, durant la phase d'assistance le contrôleur 80 ouvre une vanne commandée 77,78. Selon la figure 2, le contrôleur 80 pilote le distributeur hydraulique d'assistance 400.

Eventuellement, le contrôleur 80 choisit la voie de secours 44,45 à utiliser et/ou pilote le réchauffeur 50 et/ou le refroidisseur 60 pour que le fluide 36 transmis à un moteur thermique 10, 20 présente une température comprise dans une plage de température mémorisée.

Eventuellement, le contrôleur 80 pilote la ou les pompes 32, 33 pour que le fluide 36 présente un débit particulier.

Naturellement, la présente invention est sujette à de nombreuses variations quant à sa mise en oeuvre. Bien que plusieurs modes de réalisation aient été décrits, on comprend bien qu'il n'est pas concevable d'identifier de manière exhaustive tous les modes possibles. Il est bien sûr envisageable de remplacer un moyen décrit par un moyen équivalent sans sortir du cadre de la présente invention.

Par exemple, les systèmes de conditionnement d'air illustrés sur les figures1 et 2 comportent un réchauffeur et un refroidisseur. Toutefois, le système de conditionnement d'air pourrait posséder uniquement le réchauffeur ou le refroidisseur.

## Revendications

1. Véhicule (1) muni d'une installation motrice (5), ladite installation motrice (5) ayant au moins un moteur thermique (10, 20), ledit véhicule (1) ayant un système (30) de conditionnement d'air pour contrôler une température d'un air dans une section (4) du véhicule (1), ledit système (30) de conditionnement d'air comprenant un fluide (36) circulant dans un système (31) de circulation de fluide, le système (31) de circulation de fluide comprenant un circuit fluidique (35) cheminant dans le véhicule (1), ledit système (31) de circulation de fluide comprenant au moins une pompe (32, 33) configurée pour faire circuler ledit fluide (36) dans ledit circuit fluidique (35),
**caractérisé en ce que** ledit véhicule (1) comporte un organe d'injection (70, 72) par moteur thermique (10, 20) dudit au moins un moteur thermique, ledit organe d'injection (70, 72) étant configuré pour injecter ledit fluide (36) dans le moteur thermique (10, 20) associé, ledit véhicule (1) comportant un circuit de secours (75) connectant fluidiquement le système (31) de circulation de fluide audit organe d'injection (70, 72), ledit circuit de secours (75) comprenant un dispositif de distribution (76) contrôlé par un contrôleur (80) pour autoriser sur commande une circulation du fluide (36) vers ledit organe d'injection (70, 72).

2. Véhicule selon la revendication 1,
**caractérisé en ce que** ledit véhicule (1) comporte au moins un calculateur moteur (15, 25) configuré pour piloter ledit au moins un moteur thermique (10, 20), ledit contrôleur (80) comprenant ledit au moins un calculateur moteur (15, 25).

3. Véhicule selon l'une quelconque des revendications 1 à 2, **caractérisé en ce que** ledit contrôleur (80) comporte une interface homme-machine (81).

4. Véhicule selon l'une quelconque des revendications 1 à 3,
**caractérisé en ce que** ledit circuit de secours (75) est connecté fluidiquement au circuit fluidique (35).

5. Véhicule selon l'une quelconque des revendications 1 à 4,
**caractérisé en ce que** ledit dispositif de distribution (76) comporte une vanne commandée (77, 78) par organe d'injection (70, 72), chaque vanne commandée (77, 78) ayant un bloqueur (79) déplaçable d'une position ouverte autorisant la circulation du fluide (36) vers l'organe d'injection (70, 72) associé à une position fermée interdisant la circulation du fluide (36) vers cet organe d'injection (70, 72) associé.

6. Véhicule selon l'une quelconque des revendications 1 à 5,
**caractérisé en ce que** ledit système (31) de circulation de fluide comporte un clapet de surpression d'isolation (85) en aval d'une entrée dudit circuit de secours (85), ledit clapet de surpression d'isolation (85) étant dimensionné pour se fermer lorsque ledit fluide (36) alimente un dit organe d'injection (70, 72).

7. Véhicule selon l'une quelconque des revendications 1 à 4,
**caractérisé en ce que** ledit dispositif de distribution (76) comporte un distributeur hydraulique d'assistance (400) du circuit fluidique (35), le distributeur hydraulique d'assistance (400) ayant au moins une voie de secours (44, 45) par organe d'injection (70, 72), chaque voie de secours (44, 45) étant en communication fluidique avec un organe d'injection (70, 72).

8. Véhicule selon l'une quelconque des revendications 1 à 7, **caractérisé en ce que** ledit système (31) de circulation de fluide ayant un réchauffeur (50) configuré pour réchauffer ledit fluide (36) au sein dudit système (31) de circulation de fluide, ledit système (31) de circulation de fluide ayant un refroidisseur (60) configuré pour refroidir ledit fluide (36) au sein dudit système (31) de circulation de fluide, ledit contrôleur (80) est relié par une liaison de commande de température au réchauffeur (50) et au refroidisseur (60) ainsi qu'à un capteur de température (95,97) mesurant une température dudit fluide, ledit contrôleur (80) étant configuré pour piloter une température dudit fluide (36) en pilotant le réchauffeur (50) et le refroidisseur (60).

9. Véhicule selon l'une quelconque des revendications 1 à 8,
**caractérisé en ce que** ledit contrôleur (80) est relié par une liaison (802) de commande de débit à ladite au moins une pompe (32, 33), ledit contrôleur (80) étant configuré pour piloter ladite au moins une pompe (32, 33) au moins en cas d'alimentation en fluide d'un organe d'injection.

10. Véhicule selon l'une quelconque des revendications 1 à 9,
**caractérisé en ce que** ledit véhicule (1) comporte un senseur de puissance (14) mesurant une puissance courante développée par l'installation motrice (5), ledit contrôleur (80) est relié au senseur de puissance (14), ledit véhicule comportant au moins deux dits moteurs thermiques, ledit contrôleur (80) étant configuré pour commander ledit dispositif de distribution (76) afin d'alimenter en fluide (36) un desdits moteurs thermiques (10, 20) si la puissance courante avant une panne de l'autre moteur thermique (10, 20) est supérieure à une puissance mémorisée.

11. Véhicule selon l'une quelconque des revendications 1 à 10, **caractérisé en ce que** ledit circuit de secours (75) comporte un système de filtration (90, 901, 902) en amont dudit organe d'injection (70,72).

12. Véhicule selon l'une quelconque des revendications 1 à 11,
**caractérisé en ce que** ledit circuit de secours (75) comporte une vanne de purge (89) par organe d'injection (70,72).

13. Véhicule selon l'une quelconque des revendications 1 à 12,
**caractérisé en ce que** ledit circuit de secours (75) comporte au moins un capteur de pression de secours (96) pour mesurer une pression de secours dudit fluide (36) dans le circuit de secours (75), ledit contrôleur (80) communiquant avec le capteur de pression de secours (96), ledit contrôleur (80) étant configuré pour au moins émettre une alarme ou ne pas mettre en oeuvre une phase d'assistance si la pression de secours est inférieure à un seuil de pression de fonctionnement.

14. Véhicule selon l'une quelconque des revendications 1 à 13,
**caractérisé en ce que** ledit système (31) de circulation de fluide comporte un réservoir (37) à deux compartiments (371, 372) reliés chacun fluidiquement à ladite au moins une pompe (32, 33) par un répartiteur hydraulique (88) qui est commandé par ledit contrôleur (80), lesdits deux compartiments comprenant un compartiment principal (371) et un compartiment de secours (372) alimenté en fluide (36) par le compartiment principal (371), ledit système (31) de circulation de fluide comportant un capteur de pression principal (98) mesurant une pression principale dudit fluide (36), ledit contrôleur (80) communiquant avec le capteur de pression principal (98), le contrôleur (80) étant configuré pour piloter le répartiteur hydraulique (88) pour puiser ledit fluide (36) uniquement dans le compartiment principal (371) lorsque la pression principale est supérieure à un seuil de pression de fuite et dans le compartiment de secours (372) lorsque la pression principale est inférieure ou égal au seuil de pression de fuite.

15. Véhicule selon la revendication 14,
**caractérisé en ce que** ledit système (31) de circulation de fluide comporte un circuit de décharge (110) débouchant sur ledit réservoir (37), le circuit de décharge (110) étant muni d'un clapet de surpression de décharge (115) configuré pour s'ouvrir lorsque le répartiteur hydraulique (88) puise le fluide dans le compartiment de secours (372) et lorsqu'aucun organe d'injection (70, 72) n'est alimenté en fluide.

16. Véhicule selon la revendication 14 ou la revendication 15,
**caractérisé en ce que** ledit système (31) de circulation de fluide comporte une conduite intermédiaire (387) reliant ladite au moins une pompe (32, 33) au répartiteur hydraulique (88), ledit répartiteur hydraulique (88) mettant en communication fluidique ladite au moins une pompe (32, 33) et le circuit fluidique (35) uniquement lorsque la pression principale est supérieure au seuil de pression de fuite.

17. Procédé d'assistance pour assister une installation motrice (5) d'un véhicule (1), ladite installation motrice (5) ayant au moins un moteur thermiques (10, 20), ledit véhicule (1) ayant un système (30) de conditionnement d'air pour contrôler une température d'un air dans une section (4) du véhicule (1), ledit système (30) de conditionnement d'air comprenant un fluide (36) circulant dans un système (31) de circulation de fluide, le système (31) de circulation de fluide comprenant un circuit fluidique (35) cheminant dans le véhicule (1), ledit système (31) de circulation de fluide comprenant au moins une pompe (32, 33) configurée pour faire circuler ledit fluide (36) dans ledit circuit fluidique (35),
**caractérisé en ce que** le procédé comporte une phase d'assistance d'un moteur thermique (10, 20) à assister parmi ledit au moins un moteur thermique (10, 20) comprenant l'étape suivante : activation, sur commande d'un contrôleur (80), d'un dispositif de distribution (76) présent dans un circuit de secours (75) liant fluidiquement le système (31) de circulation de fluide et un organe d'injection (70, 72) pour acheminer ledit fluide (36) jusqu'à l'organe d'injection (70, 72) alimentant en fluide ledit moteur thermique (10, 20) à assister.

18. Procédé selon la revendication 17,
**caractérisé en ce que** le véhicule comprenant au moins deux moteurs thermiques, le procédé comporte une étape de détection d'une panne d'un moteur thermique (10, 20), parmi lesdits au moins deux moteurs thermiques (10, 20), ladite phase d'assistance étant mise en oeuvre pour le moteur thermique (10, 20), en fonctionnement suite à ladite détection d'une panne d'un moteur thermique (10, 20).

## Patentansprüche

1. Verkehrsmittel (1) mit einem Antriebsaggregat (5), wobei das Antriebsaggregat (5) mindestens einen Verbrennungsmotor (10, 20) aufweist, wobei das Verkehrsmittel (1) ein Klimatisierungssystem (30) zum Steuern einer Temperatur einer Luft in einem Abschnitt (4) des Verkehrsmittels (1) aufweist, wobei das Klimatisierungssystem (30) ein Fluid (36) umfasst, das in einem Fluidumwälzsystem (31) umgewälzt wird, wobei das Fluidumwälzsystem (31) einen Fluidkreislauf (35) umfasst, der durch das Verkehrsmittel (1) verläuft, wobei das Fluidumwälzsystem (31) mindestens eine Pumpe (32, 33) umfasst, die konfiguriert ist, um das Fluid (36) in dem Fluidkreislauf (35) umzuwälzen,
**dadurch gekennzeichnet, dass** das Verkehrsmittel (1) pro Verbrennungsmotor (10, 20) des mindestens einen Verbrennungsmotors ein Einspritzorgan (70, 72) umfasst, wobei das Einspritzorgan (70, 72) konfiguriert ist, um das Fluid (36) in den zugehörigen Verbrennungsmotor (10, 20) einzuspritzen, wobei das Verkehrsmittel (1) einen Notkreislauf (75) aufweist, der das Fluidumwälzsystem (31) mit dem Einspritzorgan (70, 72) fluidisch verbindet, wobei der Notkreislauf (75) eine Verteilervorrichtung (76) umfasst, die von einer Steuereinheit (80) gesteuert wird, um auf Befehl eine Umwälzung des Fluids (36) zu dem Einspritzorgan (70, 72) zuzulassen.

2. Verkehrsmittel nach Anspruch 1,
**dadurch gekennzeichnet, dass** das Verkehrsmittel (1) mindestens einen Motorrechner (15, 25) aufweist, der konfiguriert ist, um den mindestens einen Verbrennungsmotor (10, 20) anzusteuern, wobei die Steuereinheit (80) den mindestens einen Motorrechner (15, 25) umfasst.

3. Verkehrsmittel nach einem der Ansprüche 1 bis 2,
**dadurch gekennzeichnet, dass** die Steuereinheit (80) eine Mensch-Maschine-Schnittstelle (81) umfasst.

4. Verkehrsmittel nach einem der Ansprüche 1 bis 3,
**dadurch gekennzeichnet, dass** der Notkreislauf (75) mit dem Fluidkreislauf (35) fluidisch verbunden ist.

5. Verkehrsmittel nach einem der Ansprüche 1 bis 4,
**dadurch gekennzeichnet, dass** die Verteilervorrichtung (76) ein gesteuertes Ventil (77, 78) pro Einspritzorgan (70, 72) umfasst, wobei jedes gesteuerte Ventil (77, 78) eine Sperrvorrichtung (79) aufweist, die von einer offenen Position, die die Zirkulation des Fluids (36) zu dem zugeordneten Einspritzorgan (70, 72) zulässt, in eine geschlossene Position verstellbar ist, die die Zirkulation des Fluids (36) zu diesem zugeordneten Einspritzorgan (70, 72) unterbindet.

6. Verkehrsmittel nach einem der Ansprüche 1 bis 5,
**dadurch gekennzeichnet, dass** das Fluidumwälzsystem (31) ein Trennüberdruckventil (85) stromabwärts eines Einlasses des Notkreislaufs (85) aufweist, wobei das Trennüberdruckventil (85) bemessen ist, um sich zu schließen, wenn das Fluid (36) einem der Einspritzorgane (70, 72) zugeführt wird.

7. Verkehrsmittel nach einem der Ansprüche 1 bis 4,
**dadurch gekennzeichnet, dass** die Verteilervorrichtung (76) einen Hilfshydraulikverteiler (400) des Fluidkreislaufs (35) umfasst, wobei der Hilfshydraulikverteiler (400) mindestens einen Notweg (44, 45) pro Einspritzorgan (70, 72) aufweist, wobei jeder Notweg (44, 45) in fluidischer Verbindung mit einem Einspritzorgan (70, 72) steht.

8. Verkehrsmittel nach einem der Ansprüche 1 bis 7,
**dadurch gekennzeichnet, dass** das Fluidumwälzsystem (31) einen Erhitzer (50) aufweist, der konfiguriert ist, um das Fluid (36) in dem Fluidumwälzsystem (31) zu erhitzen, wobei das Fluidumwälzsystem (31) einen Kühler (60) aufweist, der konfiguriert ist, um das Fluid (36) in dem Fluidumwälzsystem (31) zu kühlen, die Steuereinheit (80) über eine Temperatursteuerverbindung mit dem Erhitzer (50) und dem Kühler (60) sowie mit einem Temperatursensor (95, 97) verbunden ist, der eine Temperatur des Fluids misst, wobei die Steuereinheit (80) konfiguriert ist, um eine Temperatur des Fluids (36) durch Ansteuern des Erhitzers (50) und des Kühlers (60) zu steuern.

9. Verkehrsmittel nach einem der Ansprüche 1 bis 8,
**dadurch gekennzeichnet, dass** die Steuereinheit (80) über eine Durchflusssteuerungsverbindung (802) mit der mindestens einen Pumpe (32, 33) verbunden ist, wobei die Steuereinheit (80) konfiguriert ist, um die mindestens eine Pumpe (32, 33) zumindest bei Fluidzufuhr zu einem Einspritzorgan zu steuern.

10. Verkehrsmittel nach einem der Ansprüche 1 bis 9,
**dadurch gekennzeichnet, dass** das Verkehrsmittel (1) einen Leistungssensor (14) aufweist, der eine von dem Antriebsaggregat (5) abgegebene aktuelle Leistung misst, dass die Steuereinheit (80) mit dem Leistungssensor (14) verbunden ist, dass das Verkehrsmittel mindestens zwei der Verbrennungsmotoren aufweist, und dass die Steuereinheit (80) konfiguriert ist, um die Verteilervorrichtung (76) zu steuern, um einen der Verbrennungsmotoren (10, 20) mit Fluid (36) zu versorgen, wenn die aktuelle Leistung vor einem Ausfall des anderen Verbrennungsmotors (10, 20) größer als eine gespeicherte Leistung ist.

11. Verkehrsmittel nach einem der Ansprüche 1 bis 10,
**dadurch gekennzeichnet, dass** der Notkreislauf (75) ein Filtersystem (90, 901, 902) stromaufwärts des Einspritzorgans (70, 72) umfasst.

12. Verkehrsmittel nach einem der Ansprüche 1 bis 11,
**dadurch gekennzeichnet, dass** der Notkreislauf (75) ein Ablassventil (89) pro Einspritzorgan (70, 72) umfasst.

13. Verkehrsmittel nach einem der Ansprüche 1 bis 12,
**dadurch gekennzeichnet, dass** der Notkreislauf (75) mindestens einen Notdrucksensor (96) zum Messen eines Notdrucks des Fluids (36) im Notkreislauf (75) aufweist, wobei die Steuereinheit (80) mit dem Notdrucksensor (96) kommuniziert und die Steuereinheit (80) konfiguriert ist, um mindestens einen Alarm auszugeben oder keine Hilfsphase zu implementieren, wenn der Notdruck unter einem Betriebsdruckschwellenwert liegt.

14. Verkehrsmittel nach einem der Ansprüche 1 bis 13,
**dadurch gekennzeichnet, dass** das Fluidumwälzsystem (31) einen Tank (37) mit zwei Abteilen (371, 372) umfasst, die jeweils fluidisch mit der mindestens einen Pumpe (32, 33) über einen hydraulischen Verteiler (88) verbunden sind, der von der Steuereinheit (80) gesteuert wird, wobei die beiden Abteile ein Hauptabteil (371) und ein Notabteil (372) umfassen, das von dem Hauptabteil (371) mit Fluid (36) versorgt wird, wobei das Fluidzirkulationssystem (31) einen Hauptdrucksensor (98) aufweist, der einen Hauptdruck des Fluids (36) misst, wobei die Steuereinheit (80) mit dem Hauptdrucksensor (98) kommuniziert, wobei die Steuereinheit (80) konfiguriert ist, um den hydraulischen Verteiler (88) anzusteuern, um das Fluid (36) nur aus der Hauptkammer (371) zu entnehmen, wenn der Hauptdruck höher als ein Leckdruckschwellenwert ist, und aus der Reservekammer (372), wenn der Hauptdruck niedriger oder gleich dem Leckdruckschwellenwert ist.

15. Verkehrsmittel nach Anspruch 14,
**dadurch gekennzeichnet, dass** das Fluidumwälzsystem (31) einen Entlastungskreislauf (110) umfasst, der in den Tank (37) mündet, wobei der Entlastungskreislauf (110) mit einem Entlastungsüberdruckventil (115) versehen ist, das konfiguriert ist, um sich zu öffnen, wenn der hydraulische Verteiler (88) das Fluid aus dem Notabteil (372) entnimmt und wenn kein Einspritzorgan (70, 72) mit Fluid versorgt wird.

16. Verkehrsmittel nach Anspruch 14 oder 15,
**dadurch gekennzeichnet, dass** das Fluidumwälzsystem (31) eine Zwischenleitung (387) umfasst, die die mindestens eine Pumpe (32, 33) mit dem hydraulischen Verteiler (88) verbindet, wobei der hydraulische Verteiler (88) die mindestens eine Pumpe (32, 33) und den Fluidkreislauf (35) nur dann in fluidische Verbindung bringt, wenn der Hauptdruck über dem Leckdruckschwellenwert liegt.

17. Unterstützungsverfahren zum Unterstützen eines Antriebsaggregats (5) eines Verkehrsmittels (1), wobei das Antriebsaggregat (5) mindestens einen Verbrennungsmotor (10, 20) aufweist, wobei das Verkehrsmittel (1) ein Klimatisierungssystem (30) zum Steuern einer Temperatur einer Luft in einem Abschnitt (4) des Verkehrsmittels (1) aufweist, wobei das Klimatisierungssystem (30) ein Fluid (36) umfasst, das in einem Fluidumwälzsystem (31) umgewälzt wird, wobei das Fluidumwälzsystem (31) einen Fluidkreislauf (35) umfasst, der durch das Verkehrsmittel (1) verläuft, wobei das Fluidumwälzsystem (31) mindestens eine Pumpe (32, 33) umfasst, die konfiguriert ist, um das Fluid (36) in dem Fluidkreislauf (35) umzuwälzen,
**dadurch gekennzeichnet, dass** das Verfahren eine Phase des Unterstützens eines zu unterstützenden Verbrennungsmotors (10, 20) unter dem mindestens einen Verbrennungsmotor (10, 20) umfasst, die den folgenden Schritt umfasst: Aktivieren einer in einem Notkreislauf (75), der das Fluidzirkulationssystem (31) und ein Einspritzorgan (70, 72) fluidisch verbindet, vorhandenen Verteilervorrichtung (76) auf Befehl einer Steuereinheit (80), um das Fluid (36) bis zu dem Einspritzorgan (70, 72) zu befördern, das den zu unterstützenden Verbrennungsmotor (10, 20) mit Fluid versorgt.

18. Verfahren nach Anspruch 17,
**dadurch gekennzeichnet, dass** das Verkehrsmittel mindestens zwei Verbrennungsmotoren umfasst, das Verfahren einen Schritt des Erfassens einer Störung eines Verbrennungsmotors (10, 20) unter den mindestens zwei Verbrennungsmotoren (10, 20) umfasst, wobei die Phase des Unterstützens für denjenigen Verbrennungsmotor (10, 20) durchgeführt wird, der nach dem Erfassen einer Störung eines Verbrennungsmotors (10, 20) in Betrieb ist.

## Claims

1. Vehicle (1) provided with a powertrain (5), said powertrain (5) comprising at least one heat engine (10, 20), said vehicle (1) having an air-conditioning system (30) for controlling the air temperature in a section (4) of the vehicle (1), said air-conditioning system (30) comprising a fluid (36) circulating in a fluid circulation system (31), the fluid circulation system (31) comprising a fluid circuit (35) running through the vehicle (1), said fluid circulation system (31) comprising at least one pump (32, 33) configured to cause said fluid (36) to circulate in said fluid circuit (35),
**characterized in that** said vehicle (1) comprises an injection member (70, 72) for each heat engine (10, 20) of said at least one heat engine, said injection member (70, 72) being configured to inject said fluid (36) into the associated heat engine (10, 20), said vehicle (1) comprising a back-up circuit (75) fluidly connecting the fluid circulation system (31) to said injection member (70, 72), said back-up circuit (75) comprising a distribution device (76) controlled by a controller (80) to allow a fluid (36) circulation to said injection member (70, 72) upon command.

2. Vehicle according to Claim 1,
**characterized in that** said vehicle (1) comprises at least one engine computer (15, 25) configured to control said at least one heat engine (10, 20), said controller (80) including said at least one engine computer (15, 25).

3. Vehicle according to any one of Claims 1 to 2,
**characterized in that** said controller (80) comprises a human-machine interface (81).

4. Vehicle according to any one of Claims 1 to 3,
**characterized in that** said back-up circuit (75) is fluidly connected to the fluid circuit (35).

5. Vehicle according to any one of Claims 1 to 4,
**characterized in that** said distribution device (76) comprises a valve controlled (77, 78) by the injection member (70, 72), each controlled valve (77, 78) having a blocker (79) that can be moved from an open position allowing fluid (36) to circulate towards the associated injection member (70, 72) to a closed position, preventing fluid (36) from circulating towards this associated injection member (70, 72).

6. Vehicle according to any one of Claims 1 to 5,
**characterized in that** said fluid circulation system (31) comprises an isolation pressure relief valve (85) downstream of an inlet of said back-up circuit (85), said isolation pressure relief valve (85) being sized to close when said fluid (36) supplies a said injection member (70, 72).

7. Vehicle according to any one of Claims 1 to 4,
**characterized in that** said distribution device (76) comprises a hydraulic assistance distributor (400) for the fluid circuit (35), the hydraulic assistance distributor (400) having at least one back-up channel (44, 45) per injection member (70, 72), each back-up channel (44, 45) being in fluid communication with an injection member (70, 72).

8. Vehicle according to any one of Claims 1 to 7,
**characterized in that** said fluid circulation system (31) has a heater (50) configured to heat said fluid (36) within said fluid circulation system (31), said fluid circulation system (31) having a cooler (60) configured to cool said fluid (36) within said fluid circulation system (31), said controller (80) is connected by a temperature control link to the heater (50) and to the cooler (60), as well as to a temperature sensor (95, 97) measuring a temperature of said fluid, said controller (80) being configured to control a temperature of said fluid (36) by controlling the heater (50) and the cooler (60).

9. Vehicle according to any one of Claims 1 to 8,
**characterized in that** said controller (80) is connected by a flow rate control link (802) to said at least one pump (32, 33), said controller (80) being configured to control said at least one pump (32, 33) at least when fluid is being supplied to an injection member.

10. Vehicle according to any one of Claims 1 to 9,
**characterized in that** said vehicle (1) comprises a power sensor (14) measuring a current power produced by the powertrain (5), said controller (80) is connected to the power sensor (14), said vehicle having at least two said heat engines, said controller (80) being configured to control said distribution device (76), in order to supply fluid (36) to one of said heat engines (10, 20) if the current power prior to a failure of the other heat engine (10, 20) is greater than a stored power.

11. Vehicle according to any one of Claims 1 to 10,
**characterized in that** said back-up circuit (75) comprises a filtration system (90, 901, 902) upstream of said injection member (70, 72).

12. Vehicle according to any one of Claims 1 to 11,
**characterized in that** said back-up circuit (75) comprises a purge valve (89) per injection member (70, 72).

13. Vehicle according to any one of Claims 1 to 12,
**characterized in that** said back-up circuit (75) comprises at least one back-up pressure sensor (96) for measuring a back-up pressure of said fluid (36) in the back-up circuit (75), said controller (80) communicating with the back-up pressure sensor (96), said controller (80) being configured at least to emit an alarm or not implement an assistance phase if the back-up pressure is below an operating pressure threshold.

14. Vehicle according to any one of Claims 1 to 13,
**characterized in that** said fluid circulation system (31) comprises a tank (37) with two compartments (371, 372) each fluidly connected to said at least one pump (32, 33) by a hydraulic distributor (88) controlled by said controller (80), said two compartments comprising a main compartment (371) and a back-up compartment (372) supplied with fluid (36) by the main compartment (371), said fluid circulation system (31) having a main pressure sensor (98) measuring a main pressure of said fluid (36), said controller (80) communicating with the main pressure sensor (98), the controller (80) being configured to control the hydraulic distributor (88) to draw said fluid (36) only from the main compartment (371) when the main pressure is greater than a leakage pressure threshold and from the back-up compartment (372) when the main pressure is less than, or equal to the leakage pressure threshold.

15. Vehicle according to Claim 14,
**characterized in that** said fluid circulation system (31) comprises a discharge circuit (110) opening into said tank (37), the discharge circuit (110) being provided with a discharge pressure relief valve (115) configured to open when the hydraulic distributor (88) draws fluid from the back-up compartment (372) and when no injection member (70, 72) is being supplied with fluid.

16. Vehicle according to Claim 14 or Claim 15,
**characterized in that** said fluid circulation system (31) comprises an intermediate conduit (387) connecting said at least one pump (32, 33) to the hydraulic distributor (88), said hydraulic distributor (88) establishing fluid communication between said at least one pump (32, 33) and the fluid circuit (35) only when the main pressure is greater than the leakage pressure threshold.

17. Method of assisting a powertrain (5) of a vehicle (1), said powertrain (5) having at least one heat engine (10, 20), said vehicle (1) having an air-conditioning system (30) for controlling an air temperature in a section (4) of the vehicle (1), said air-conditioning system (30) comprising a fluid (36) circulating in a fluid circulation system (31), the fluid circulation system (31) comprising a fluid circuit (35) running through the vehicle (1), said fluid circulation system (31) comprising at least one pump (32, 33) configured to circulate said fluid (36) in said fluid circuit (35),
**characterized in that** the method comprises an assistance phase of a heat engine (10, 20) for assisting one of said at least one heat engine (10, 20), comprising the following step: activation, upon command from a controller (80), of a distribution device (76) present in a back-up circuit (75) fluidly connecting the fluid circulation system (31) and an injection member (70, 72), in order to convey said fluid (36) to the injection member (70, 72) supplying fluid to said heat engine (10, 20) to be assisted.

18. Method according to Claim 17,
**characterized in that** the vehicle comprises at least two heat engines, the method comprises a step of detecting a failure of one heat engine (10, 20) of said at least two heat engines (10, 20), said assistance phase being implemented for the heat engine (10, 20) that remains in operation following said detection of a failure of one heat engine (10, 20).
